(19) Europäisches Patentamt
European Patent Office
Office européen des brevets

(11) **EP 0 855 779 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(51) Int Cl.$^7$: **H02H 3/33**

(21) Anmeldenummer: **98100403.9**

(22) Anmeldetag: **12.01.1998**

(54) **Fehlerstromschutzeinrichtung mit Bandpassverhalten im Auslösekreis**

Earth fault protection device with band-pass caracteristic in the tripping circuit

Dispositif de protection contre les courants de défaut avec une caractéristique de passe-bande dans le circuit de déclenchement

(84) Benannte Vertragsstaaten:
**AT CH DE ES FR GB IT LI**

(30) Priorität: **23.01.1997 DE 19702371**

(43) Veröffentlichungstag der Anmeldung:
**29.07.1998 Patentblatt 1998/31**

(73) Patentinhaber: **SIEMENS AKTIENGESELLSCHAFT**
**80333 München (DE)**

(72) Erfinder:
- **Bauer, Bernhard, Dipl.-Ing. (FH)**
  **93053 Regensburg (DE)**
- **Kleemeier, Manfred, Dipl.-Ing. (FH)**
  **93073 Neutraubling (DE)**
- **Schmid, Reinhard, Dipl.-Ing.**
  **93051 Regensburg (DE)**

(56) Entgegenhaltungen:
**DE-A- 3 307 443**          **FR-A- 2 099 548**
**GB-A- 2 018 534**

**Beschreibung**

Die Erfindung bezieht sich auf eine Fehlerstromschutzeinrichtung, die mit einem Summenstromwandler arbeitet, dessen Kern aus nanokristallinem Material gebildet ist, und der eine Kapazität an das Auslöserelais angekoppelt ist. Kernmaterialien aus nanokristallinem Material eignen sich, die verschiedenartigsten Fehlerstromformen zu erfassen (DE-A-42 10 748, EP-A-0 563 606).

Wenn man einen Auslösekreis mit verlustarmem nanokristallinem Material im Summenstromwandler für netzspannungsunabhängige Fehlerstromschutzeinrichtungen entwickeln und abstimmen möchte, ist eine Reihe von Problemen zu lösen:

So kann man zwar zur Anpassung an pulsierende Gleichfehlerströme in bekannter Weise in den Auslösekreis eine Reihen- oder Parallelkapazität zur Resonanzabstimmung einsetzen (DE-C-20 36 497). Wenn man so bei nanokristallinem Material vorgeht, erhält man bei Temperaturänderungen, Temperaturdrift, eine unsichere Auslösung bei Fehlerströmen. Zum anderen möchte man bei transienten Fehlerströmen im Frequenzbereich oberhalb 600 Hz Fehlauslösungen vermeiden.

GB-A-2 018 534 zeigt eine Fehlerstromschutzeinrichtung mit Summenstromwandler, dessen Ausgangssignal einem aktiven Filter mit Bandpassverhalten zugeführt wird, um einen Fehlerstrom mit hohem Gleichstromanteil zu erkennen, wobei das aktive Filter auf eine Frequenz von 50 Hz abgestimmt ist.

Der Erfindung liegt die Aufgabe zugrunde, eine Fehlerstromschutzeinrichtung zu entwickeln, die bei Einsatz von nanokristallinem Material auf ein breites Spektrum von Fehlerstromarten anspricht und weitgehend temperaturunempfindlich ist.

Die Lösung der geschilderten Aufgabe erfolgt durch eine Fehlerstromschutzeinrichtung nach Anspruch 1. Danach ist der komplexe Widerstand des Auslösekreises auf ein Bandpaßverhalten abgestimmt, indem eine Reihenkapazität CR und eine Parallelkapazität CP im Auslösekreis vorgesehen ist, welche der Bedingung genügen CR ≤ 5 x CP.

Ein derartiger Auslösekreis ermöglicht eine gute Anpassung, d.h. eine maximale Auslöschescheinleistung am Auslöserrelais und hohe Fehlauslösefertigkeit. Es wird ein Bandpaß erzielt, der eine wünschenswert gute hohe Dämpfung bei Fehlerstromfrequenzen > 600 Hz aufweist. Dadurch gewinnt man eine hohe Fehlauslösungsfertigkeit des Auslösekreises bei transienten, mittelfrequenten Fehlerströmen und auch gute Stoßstromfestigkeit. Man vermeidet die sonst bei Summenstromwandlern mit nanokristallinem Kernmaterial auftretenden extrem schmalbandigen Resonanzüberhöhungen.

Der Erfindung liegt die Überlegung zugrunde, daß verlustarme nanokristalline Magnetwerkstoffe aufgrund ihrer Materialeigenschaften für die Realisierung von auf Wechsel- und auf Pulsstromfehlerstrom sensitive Fehlerstromschutzeinrichtungen gegenüber den bisher gebräuchlichen kristallinen Werkstoffen die bekannten Vorteile aufweisen, insbesondere geringe Verluste und geringe Beeinflussung durch Gleichstromvormagnetisierung. Die an sich vorhandene Temperaturstabilität ist jedoch auch in Abstimmung auf verschiedenartige Fehlerstromarten zu verbessern. Durch die Fehlerstromschutzeinrichtung nach der Erfindung wird dies erzielt. Eine derartige Fehlerstromschutzeinrichtung bietet den Vorteil, daß auch phasenangeschnittene Fehlerströme mit 135 °el erfaßt werden können, indem Oberwellen mindestens bis zur fünften Ordnung, 250 Hz, zu einem hohen Anteil von mindestens 60 % erfaßt werden. Die Auslösewerte bleiben hierbei mit hoher Sicherheit innerhalb der Grenzwerte nach den einschlägigen Vorschriften.

Der Fehlerstromschutzschalter kann hierbei auf den 50 Hz-Wechselfehlerstrom als Basis abgestimmt sein. Auch die Resonanzabstimmung des Auslösekreises wird ermöglicht, indem den Vorschriften entsprechend für pulsierende und für phasenangeschnittene Fehlerströme der 1,4-fache Wechselfehlerstrom als Auslösegrenze zugrunde gelegt werden kann. Hierbei wird das inzwischen anerkannte Prinzip der Resonanzabstimmung verlassen und der Auslösekreis entgegen der naturbedingten Schmalbandigkeit eines Auslösekreises bei nanokristallinem Material als geeigneter Bandpaß vorgesehen.

Die Fehlerstromschutzeinrichtung kann mit ihrem komplexen Widerstand insbesondere darauf abgestimmt sein, daß Oberwellen bis zur fünften Ordnung zu einem Anteil von 60 %, bezogen auf den Maximalwert, und darüber erfaßt werden.

Die Erfindung soll nun anhand von in der Zeichnung grob schematisch wiedergegebenen Ausführungsbeispielen näher erläutert werden:

In FIG 1 ist ein Ersatzschaltbild für die erfindungsgemäße Fehlerstromschutzeinrichtung wiedergegeben.

In FIG 2 ist anhand des Frequenzganges des Haltemagnetstroms das Auslöseverhalten für eine erfindungsgemäße Fehlerstromschutzeinrichtung veranschaulicht.

In FIG 3 ist anhand der Darstellung nach FIG 2 das Auslöseverhalten eines nicht erfindungsgemäß abgestimmten Auslösekreises mit nanokristallinem Material wiedergegeben.

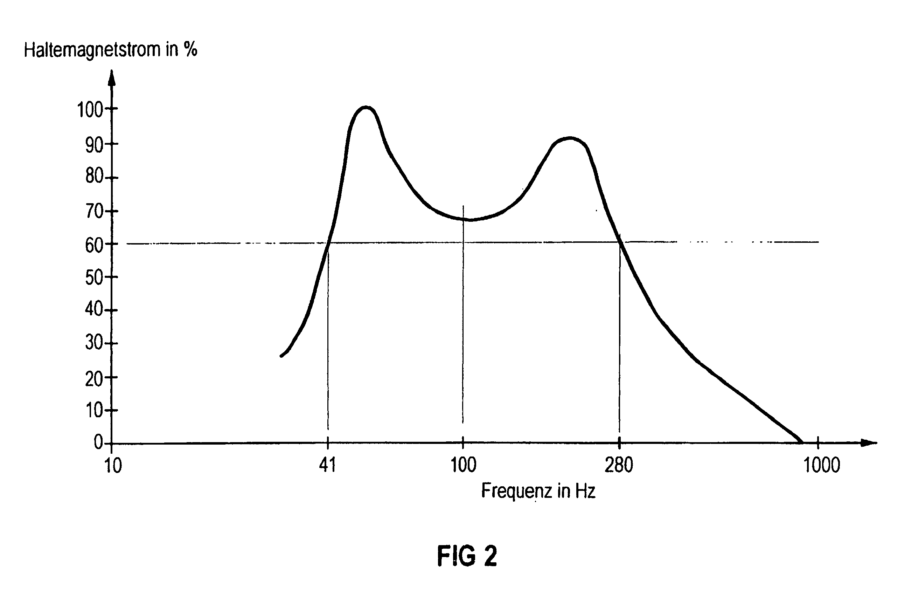

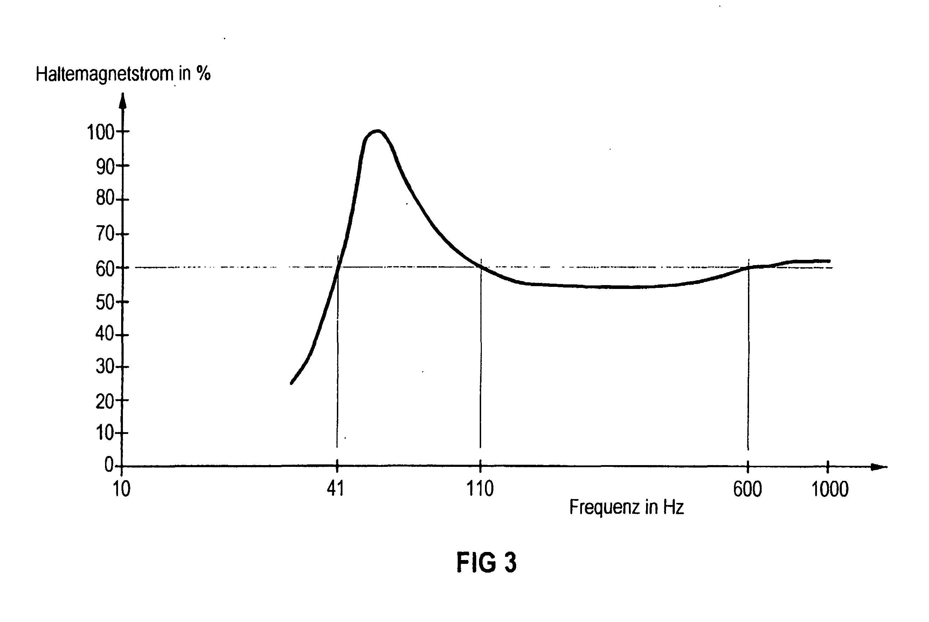

In FIG 3 ist für eine Darstellung nach FIG 2 das Auslöseverhalten eines nicht erfindungsgemäß abgestimmten Auslösekreises bei einem Summenstromwandler mit nanokristallinem Material wiedergegeben. Eine den hier gesetzten Anforderungen genügende Auslösung wird mit herkömmlichen Mitteln hierbei nur in einem Frequenzbereich von 40 bis ca. 110 Hz realisiert. Hierbei ist es ungünstig, daß auch Fehlerstromfrequenzen > 600 Hz mit mindestens 60%, bezogen auf den Maximalwert, übertragen werden. Dadurch können bei transienten, mittelfrequenten Fehlerströmen Fehlauslösungen auftreten.

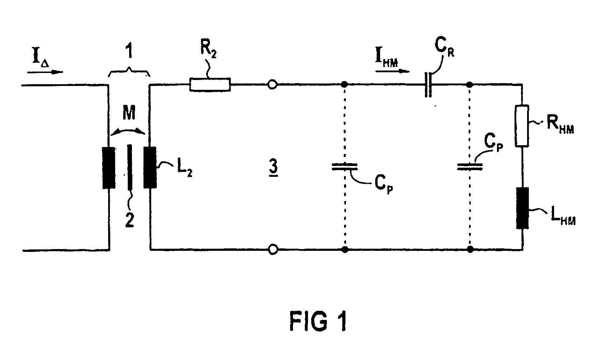

Die erfindungsgemäße Fehlerstromschutzeinrichtung nach FIG 1 arbeitet mit einem Summenstromwandler 1 mit der Sekundärinduktivität L2. Der Summenstromwandler weist einen Kern 2 aus nanokristallinem Material auf. Der Auslösekreis 3 ist mittels Kapazitäten auf einen komplexen Widerstand eingestellt. Es ist wesentlich, daß der komplexe Widerstand auf ein Bandpaßverhalten abgestimmt ist, indem eine Reihenkapazität CR und eine Parallelkapazität CP der Bedingung genügen:

$$CR \leq 5 \times CP.$$

Die Sekundärwicklung weist einen Wicklungswiderstand R2 und die Auslöseeinrichtung eine Induktivität LHM und einen ohmschen Widerstand RHM auf. In FIG 1 sind für die Anordnung von CP zwei Varianten veranschaulicht.

Der komplexe Widerstand des Auslösekreises ist nach FIG 2 darauf abgestimmt, daß Oberwellen bis zur fünften Ordnung, bei 50 Hz Grundeinstellung, also bis 250 Hz, zu einem Anteil von mindestens 60% - bezogen auf den Maximalwert - und darüber, erfaßt werden. In FIG 2 ist auf der Abszisse die Frequenz in Hz und auf der Ordinate der Haltemagnetstrom in %, also bezogen auf den Maximalwert, bei 50 Hz aufgetragen. Im gesamten Bereich von beispielsweise 40 Hz bis 280 Hz wird also eine Übertragung von 60%, bezogen auf den Maximalwert, erzielt. Dabei werden Fehlerströme mit Frequenzen oberhalb 600 Hz hoch, maximal bei -4,44 dB, bedämpft, so daß man einen Auslösekreis mit hoher Fehlauslösungsfestigkeit erhält. Unter einer hohen Dämpfung wird hierbei eine Dämpfung stärker als -10 dB, bezogen auf den Maximalwert, verstanden. Die Fehlerstromschutzeinrichtung ist dabei unempfindlich gegen transiente, mittelfrequente Fehlerströme und Stoßströme. Die aus den geringen Verlusten des nanokristallinen Materials resultierende Schmalbandigkeit des Auslöseverhaltens wird ebenso wie seine Temperaturdrift vermieden.

Es ist günstig, wenn der komplexe Widerstand auch auf ein Bandpaßverhalten abgestimmt ist, bei dem Oberwellen ab der 12. Ordnung, bezogen auf die Nennfrequenz, mit einer Dämpfung stärker als -10 dB, bezogen auf den Maximalwert, übertragen werden.

**Patentansprüche**

1. Fehlerstromschutzeinrichtung, die mit einem Summenstromwandler (1) arbeitet, dessen Kern (2) aus nanokristallinem Material gebildet ist, und deren Auslösekreis (3) mittels einer Kapazität auf einen komplexen Widerstand zur Resonanzabstimmung eingestellt ist,
   **dadurch gekennzeichnet,**
   **daß** der komplexe Widerstand auf ein Bandpaßverhalten abgestimmt ist, indem eine Reihenkapazität (CR) und eine Parallelkapazität (CP) im Auslösekreis vorgesehen ist, welche der Bedingung genügen CR $\leq$ 5 x CP.

2. Fehlerstromschutzeinrichtung nach Anspruch 1,
   **dadurch gekennzeichnet,**
   **daß** der komplexe Widerstand auf ein Bandpaßverhalten abgestimmt ist, bei dem Oberwellen bis zur fünften Ordnung, bezogen auf die Nennfrequenz, mit einer maximalen Dämpfung von - 4,44 dB, bezogen auf den Maximalwert, übertragen werden.

3. Fehlerstromschutzeinrichtung nach Anspruch 1,
   **dadurch gekennzeichnet,**
   **daß** der komplexe Widerstand auf ein Bandpaßverhalten abgestimmt ist, bei dem Oberwellen ab der 12. Ordnung, bezogen auf die Nennfrequenz, mit einer Dämpfung stärker ab - 10 dB, bezogen auf den Maximalwert, übertragen werden.

**Claims**

1. Residual-current device that operates with a summation current transformer (1), whose core (2) is formed from nanocrystalline material and whose triggering circuit (3) is set to a vector impedance by means of a capacitor for resonance tuning,
   **characterised in that**
   the vector resistance is tuned to a bandpass performance characteristic, **in that** a series capacitor (CR) and parallel capacitor (CP) that satisfies the requirement CR $\leq$5 x CP are provided **in that** triggering circuit.

2. Residual-current device in accordance with claim 1,
   **characterised in that**
   the vector impedance is tuned to a bandpass performance characteristic at which harmonics up to the fifth order relative to the nominal frequency are transmitted with a maximum damping factor of -4.44 dB relative to the maximum value.

3. Residual-current device in accordance with claim 1,
   **characterised in that**
   the vector impedance is tuned to a bandpass performance characteristic at which harmonics above the twelfth order relative to the nominal frequency are transmitted with a damping factor greater than -10 dB relative to the maximum value.

## Revendications

1. Dispositif de protection contre les courants de défaut, qui fonctionne avec un transformateur de courant cumulé (1), dont le noyau (2) est en un matériau nanocristallin, et dont le circuit de déclenchement (3) est réglé au moyen d'une capacité sur une résistance complexe pour le réglage de résonance,

   **caractérisé par le fait que** la résistance complexe est réglée sur une caractéristique passe-bande en prévoyant dans le circuit de déclenchement une capacité série (CR) et une capacité parallèle (CP) qui satisfont à la condition $CR \leq 5 \times CP$.

2. Dispositif de protection contre les courants de défaut selon la revendication 1,

   **caractérisé par le fait que** la résistance complexe est réglée sur une caractéristique passe-bande pour laquelle des harmoniques jusqu'au cinquième degré, par rapport à la fréquence nominale, sont transmis avec un affaiblissement maximal de- 4,44 dB, par rapport à la valeur maximale.

3. Dispositif de protection contre les courants de défaut selon la revendication 1,

   **caractérisé par le fait que** la résistance complexe est réglée sur une caractéristique passe-bande pour laquelle des harmoniques à partir du 12ème degré, par rapport à la fréquence nominale, sont transmis avec un affaiblissement supérieur à - 10 dB, par rapport à la valeur maximale.

FIG 1

Haltemagnetstrom in %

Frequenz in Hz

**FIG 2**

FIG 3